# EUROPEAN PATENT APPLICATION

(11) **EP 1 835 728 A1**
(43) Date of publication of application: **19.09.2007**
(21) Application number: 06290419.8
(22) Date of filing: 15.03.2006
(51) Int. Cl.: H04N 5/00

(54) **Method for data transfer and data recovery**

(71) Applicant: Dibcom, 91120 Palaiseau (FR)
(72) Inventor: Fallon, Henry, 75006 Paris (FR); de March, Stéphane, 75015 Paris (FR)
(74) Representative: Cefai, Robin

(57) **Abstract**

This method is for processing data frames (Fi) received over a communication channel, each data frame (Fi) comprising a data section (Si) for forming part of a data table and location information (Mi) associated with the data section and designating a location of said section within the data table. The data table and a metadata table (MT) are built and stored as the data frames are received, to be made available to a host processor (2).

The method comprises the following steps for each received data frame:
- buffering (10, 12) the data section of the received frame and the associated location information;
- determining (14) an address for the data section in a table memory (8) based on the location information;
- writing the data section at the determined address into the table memory; and
- writing an entry of a metadata table, wherein said entry comprises the location information.

## Description

The present invention concerns the reception of data tables or data arrays transmitted by sections and associated with location information, also called metadata.

Data tables are formed of data sorted in rows and columns, each data having a specified location in the table. In certain error correction schemes parity codes are computed row-wise and/or column-wise and added to the table. For example, the Reed Solomon code can be applied row wise for a table transmitted column wise. These codes are then used to perform error correction using iterative algorithms to try to correct the table and to deliver a table successfully corrected.

For transmitting such a data table over a communication channel, it can be sliced into sections. Each section is then associated with location information for the receiver to rebuild the data table upon reception.

Typically, the location information is placed in a header transmitted along with the section and indicates the address in the table where the section starts. Usually, beside the section and the header, the transmitted frame also comprises specific validity information such as a Cyclic Redundancy Checksum (CRC) to allow error detection over the frame.

Such a transmission is used for example for multi-protocol encapsulation (MPE) in digital television transmission. In such a transmission, sections contain data formed according to several protocols such as MPEG-2 and IP.

Usually, reception of such data table is achieved by the use of a host processor and a co-processor. For example, the host processor is the main processor of a receiver and the co-processor is part of a demodulator chip.

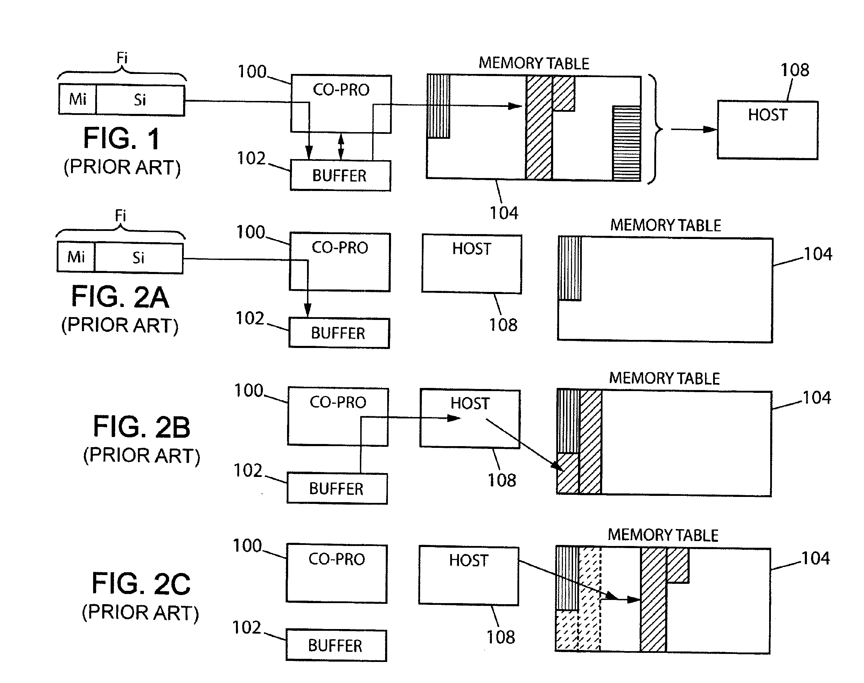

Two main embodiments exist in the prior art for the reception of such data tables by means of a host processor and a co-processor and will be described with reference to figures 1 and 2A to 2C.

In a first embodiment, the co-processor 100 is in charge of assembling the data table.

As represented on figure 1, the co-processor 100 has access to a table memory 102 and to a buffer memory 104. Upon reception of a section Si of the data table transmitted together with respective metadata Mi, the co-processor 100 stores the entire section frame Fi containing the section Si and metadata Mi into the buffer memory. The co-processor 100 also checks the validity information of the frame, namely its CRC.

The co-processor 100 then analyses the metadata and places the section at its location in the table memory. The buffer memory 102 is then updated by the writing of the following frame, with a new section with its metadata.

Then, when the entire table is retrieved, the co-processor 100 performs the error correction on the table using the correction codes on the rows and/or columns. The table is transmitted to a host processor 104 only if it has been entirely corrected and thus if it is error free.

In this embodiment, once the table is rebuilt, it is not possible to separate within the table, erroneous data from correct data. In particular, if a section was lost during the transmission or if the table contains too many errors, the table cannot be entirely corrected. In that case, the entire table is discarded even if fragments of this table were error-free.

In another embodiment represented with reference to figures 2A-C, the host processor 204 has access to the table memory 102. This is referred to as host buffering mode.

As previously, the co-processor 100 receives an entire frame with its section together with metadata and memorises it into the buffer memory 102 as represented in figure 2A.

The co-processor 100 checks the validity information of the frame and then transmits the content of the buffer memory 102 as received to the host processor 104.

The host processor must memorize again into another buffer memory the entire section together with its metadata. Usually, the host processor 104 uses the table memory and writes the received section with the metadata in the first available slot as represented in figure 2B.

The host processor 104 then analyses the metadata and, once the correct location has been determined it moves the section to its correct location in the table memory 102 as represented in figure 2C.

Accordingly, in this embodiment, the host processor needs to memorize the data upon reception and then, to relocate it. This consumes resources and time, as two accesses to the table memory are required.

Furthermore, as in the embodiment described previously, the table is discarded if it can not be successfully corrected, i.e. if there are too many erroneous data.

Thus, the existing solutions are not satisfying as they do not allow retrieving fragments of the tables and/or they require considerable amount of resource of the host processor.

An object of the present invention is to solve these problems by providing an efficient method and a corresponding device and program for reception of data tables by means of a processor and a co-processor.

To this effect, the invention relates to a method of processing as recited in claim 1 and a corresponding device as reciting in claims 14 to 16. The invention also relates to processor programs as recited in claims 11 to 13.

The creation of a metadata table allows retrieving of received fragments of the table even if the entire table contains too many errors to be entirely corrected. Furthermore, in one embodiment, thanks to the retrieval of the location information by the host processor the computations achieved by the host processor are reduced.

Other features and advantages of the invention will be apparent from the description illustrated by the drawings in which:
- figures 1, 2A, 2B and 2C, which were already mentioned, represent prior art embodiments;
- figures 3A and 3B represent the method and device of the invention according to a first embodiment; and
- figures 4A and 4B represent a second embodiment of the method and device of the invention.

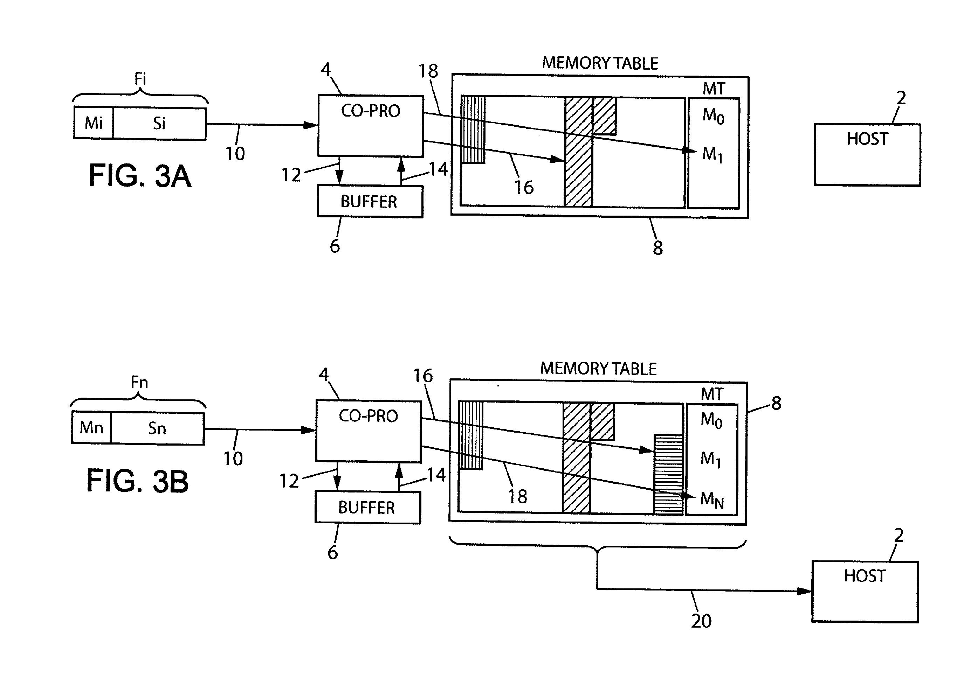

With reference to figures 3A and 3B, a first embodiment of the method and device of the invention will now be described in the case of reception of data tables transmitted by sections Si, each section being associated with location information Mi and by means of a host processor 2 and a co-processor 4.

In the described example, the host processor 2 is the main processor of a digital TV receiver and the co-processor 4 is the calculator of a demodulator chip within the receiver.

The data transmitted is coded according to several protocols such as for example the MPEG-2 and the IP protocols. This data is then sorted in rows and columns to form a data table which is transmitted to the co-processor 4 over a communication channel using a transmission standard such as for example, the standard use for DVB-H or DVB-T. More precisely, in the embodiment described, the table comprises rows of 191 bytes of data and 64 bytes delivered by the application of the Reed Solomon code to the 191 first bytes.

For the transmission, the table is sliced thus forming frames Fi of multi-encapsulated protocol (MPE) data. Each frame contains a section referenced Si associated with location information, called metadata and referenced Mi. Accordingly to the used standard, each section contains a single IP packet and validity information obtained by the use of a CRC code is added to the frame.

In the example, the metadata Mi contain the location in the table of the first data of the corresponding section Si and the validity information.

Conventionally, the co-processor 4 is associated with a buffer memory 6 and a table memory 8.

In a first step 10 of the method, a frame Fi is received by the co-processor 4. The section Si contained in frame Fi and the metadata Mi associated with it, are memorized in the buffer memory 6 in a step 12.

The co-processor then retrieves from the buffer memory 6 the metadata Mi in a step 14 to analyze them and checks the validity information. An indicator is used to indicate if the section is valid or not. In the example, this indicator is the validity information itself which is modified if the frame is not correct.

The co-processor 4 then places the section Si directly to its corresponding location in the table memory in a step 16.

Furthermore, during a step 18, the co-processor 4 creates an entry in a metadata table, i.e. it writes in a dedicated section of the table memory a set of data containing information about the data table, called MT. This metadata table MT contains information about the location of the received sections in the table memory and validity information.

In the described example, the entry in the metadata table contains the set of metadata associated with a received and memorized section.

Of course, steps 16 and 18 can be performed simultaneously or one after the other without impact on the functioning of the invention.

As represented in figure 3B, steps 10 to 18 are repeated until the last frame Fn with the last section Sn of the table, is received. At that stage, the table memory contains several sections of data memorized at their correct locations and the metadata table MT containing pointers to the beginning of each section within the table memory and validity information.

The content of the table memory, i.e. the retrieved data table and its metadata table MT, is then made available to the host processor in a step 20. For example the table memory 8 is adapted to be accessed by both the host processor and the co-processor, or the content of the table memory is sent by the co-processor to the host processor.

Accordingly, in this embodiment the host processor retrieves directly the rebuilt table data associated with metadata indicating where the received sections are located within this table.

Then, the host processor achieves the iterative error correction on the table by use of Reed Solomon code. If the table still contains errors after this step, i.e. if the table contains too many enormous data to be entirely corrected, the receiver can still extract individual sections from the table.

For example, the receiver can check the header of each received section and then extract some sections. Depending on the protocol of these extracted sections, the host processor may still be able to use them. For example, an IP section can be checked and used if error-free.

Thus, in this embodiment, very little computation is achieved by the host processor and means are provided to retrieve received fragments of a table with erroneous data.

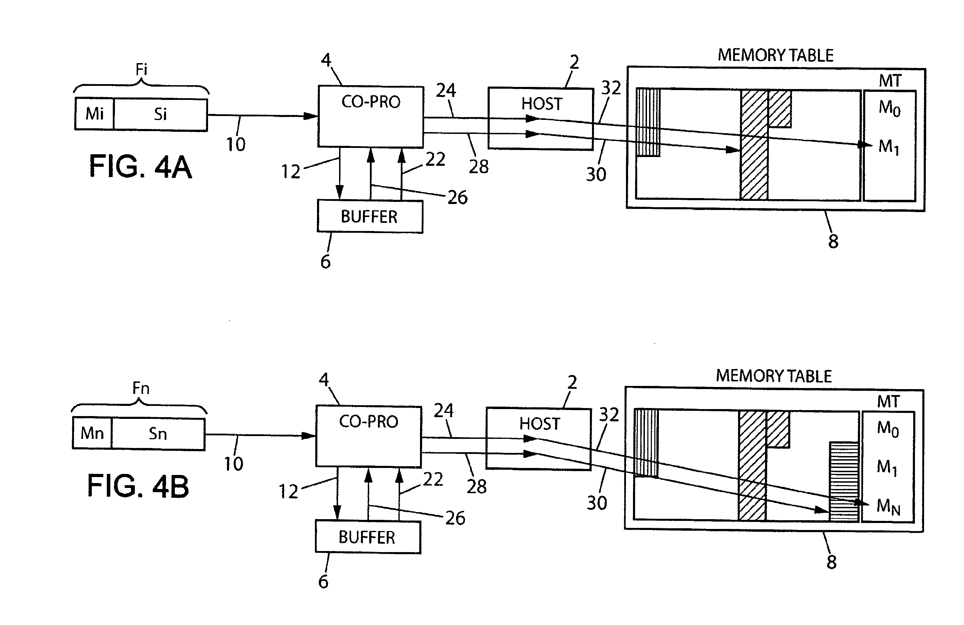

With reference to figures 4A and 4B, another embodiment of the invention corresponding to the so-called host buffer mode, will now be described.

As described previously, the method starts with the reception at step 10 by the co-processor 4 of the frame Fi containing a section Si associated with metadata Mi.

The entire frame Fi is then memorized in the buffer memory 6 at the step 12.

The method then comprises a step 22 in which the co-processor 4 retrieves the metadata Mi in the buffer memory followed by a step 24 in which the co-processor 4 transmits these metadata to the host processor 2 for analysis.

The method then comprises a step 26 in which the co-processor 4 retrieves the section Si from the buffer memory 6 followed by a step 28 in which the co-processor 4 transmits the section to the host processor 2.

Upon reception of this section Si, the host processor 2, which has already analysed the metadata Mi associated with this section, is able to check the validity of the section and directly write it to its corresponding location in the table memory in a step 30.

The method then comprises a step 32 in which the host processor 2 creates an entry of the metadata table. As in the embodiment described with reference to figures 3A and 3B, the metadata Mi are stored in association with the section Si.

Of course, steps 30 and 32 can be performed simultaneously or one after the other without impact on the functioning of the invention.

As represented on figure 4B, steps 10 to 32 are repeated for every new frame received by the co-processor 4 in order to rebuild the data table and to create the associated metadata table MT which contains the location of every received section.

The host processor is then able to run the table error correction code. The host can perform directly these operations or send the data to the co-processor row by row for the co-processor to perform the error correction.

Accordingly, the method and device of the invention reduce the computation time required from the host processor as there is only one operation of writing in the table memory due to reception in two steps of the metadata and of the section.

Furthermore, the invention also allows retrieving fragments of the data table even if it contains too many errors to be entirely corrected, by use of the metadata table.

Of course, many other embodiments are possible.

In another embodiment, the co-processor monitors the reception of the frames to determine their quality. This is performed without accessing the data of the section, for example by monitoring the gain of the signal upon reception or the length of the sections. Thus, in this embodiment, an indicator is available to indicate the quality of the received frame and thus of the received section. This indicator is used to create the metadata table entries in order, for example, to retrieve only correctly received sections from a table containing errors.

Alternatively, the created metadata table entries contain different types of data indicating the location of the received sections.

The method of the invention is typically, though not exclusively, carried out by means of computer programs for execution respectively by a host processor and a co-processor.

More precisely, the first embodiment of the invention can make use of a computer program for execution by a co-processor, the computer program having instructions to perform, for each received data frame, the following processing when executed by said co-processor:
- buffering the data section of the received frame and the associated location information;
- determining an address for the data section in a table memory based on the location information;
- writing the data section at the determined address into the table memory; and
- writing an entry of the metadata table, wherein said entry comprises the location information.

In this embodiment, the computer program of the host processor needs only to be adapted to access the table memory to retrieve both the rebuilt data tables and the corresponding metadata table or to receive it from the co-processor.

The second embodiment of the invention can make use of a computer program for execution by a co-processor, the computer program having instructions to perform, for each received data frame, the following processing when executed by said co-processor:
- buffering the data section of the received frame and the associated location information;
- reading the buffered location information and forwarding it to a host processor; and
- reading the buffered section and forwarding it to a host processor.

In that embodiment, the invention can also make use of a computer program for execution by the host processor, the computer program having instructions to perform, for each received data frame, the following processing when executed by said host processor:
- receiving from a co-processor location information;
- determining an address for the data section in a table memory based on the location information;
- receiving from the co-processor the data section;
- writing the data section at the determined address into the table memory; and
- writing an entry of the metadata table, wherein said entry comprises the location information.

Advantageously, the computer program for execution by the host processor has instruction to retrieve fragments of data within the table by use of the metadata table.

## Claims

1. Method of processing data frames (Fi) received over a communication channel, wherein each data frame (Fi) comprises a data section (Si) for forming part of a data table and location information (Mi) associated with the data section and designating a location of said section within the data table, wherein the data table and a metadata table (MT) are built and stored as the data frames are received, to be made available to a host processor (2), and wherein the method comprises the following steps for each received data frame:
- buffering (10, 12) the data section of the received frame and the associated location information;
- determining (14; 22) an address for the data section in a table memory (8) based on the location information;
- writing (16; 30) the data section at the determined address into the table memory; and
- writing (18; 32) an entry of the metadata table, wherein said entry comprises the location information.

2. Method according to claim 1, wherein the step of buffering is carried out by a co-processor (4).

3. Method according to claim 2, wherein the steps of determining an address and writing (6) the data section and the entry (18) of the metadata table are carried out by the co-processor (4).

4. Method according to claim 2, wherein the steps of determining an address and writing (30) the data section and the entry (32) of the metadata table are carried out by the host processor (2).

5. Method according to 4, further comprising a step of reading (22) the buffered location information by the co-processor (4) and forwarding (24) it to the host processor (2) and then a step of reading (26) the buffered section by the co-processor and forwarding (28) it to the host processor.

6. Method according to any of claims 1 to 5, wherein the metadata table (MT) is stored in the table memory (8).

7. Method according to any of claims 1 to 6, wherein said step of creating an entry in the metadata table comprises writing the metadata associated with the section, in the metadata table.

8. Method according to any of claims 1 to 7, further comprising a step of verifying the validity of the frames and delivering an indicator of their validity, said indicator being used to create said entry on the metadata table.

9. Method according to any of claims 1 to 8, further comprising a step of monitoring the reception of the frames and delivering an indicator of their quality, said indicator being used to create said entry in the metadata table.

10. Method according to any of claims 1 to 9, further comprising the following steps after reception the data table has been made available :
- applying and error detection and correction processing to the data table stored in the table memory (8); and
- if the data table is determined to contain errors after said error detection and correction processing, examining the metadata table (MT) for extracting part of the stored data table.

11. Computer program for processing data frames (Fi) received over a communication channel, wherein each data frame (Fi) comprises a data section (Si) for forming part of a data table and location information (Mi) associated with the data section and designating a location of said section within the data table, wherein the data table and a metadata table (MT) are built and stored as the data frames are received, the computer program having instructions to perform, for each received data frame, the following processing, when executed by said co-processor:
- buffering (10, 12) the data section of the received frame and the associated location information;
- determining (14) an address for the data section in a table memory (8) based on the location information;
- writing (16) the data section at the determined address into the table memory; and
- writing (18) an entry of the metadata table, wherein said entry comprises the location information.

12. Computer program for processing data frames (Fi) received over a communication channel, wherein each data frame (Fi) comprises a data section (Si) for forming part of a data table and location information (Mi) associated with the data section and designating a location of said section within the data table, the computer program having instructions to perform, for each received data frame, the following processing, when executed by said co-processor:
- buffering (10, 12) the data section of the received frame and the associated location information;
- reading (22) the buffered location information and forwarding (24) it to a host processor (2); and
- reading (26) the buffered section and forwarding (28) it to a host processor (2).

13. Computer program for processing data frames (Fi) received over a communication channel, wherein each data frame (Fi) comprises a data section (Si) for forming part of a data table and location information (Mi) associated with the data section and designating a location of said section within the data table, wherein the data table and a metadata table (MT) are built and stored as the data frames are received, the computer program having instructions to perform, for each received data frame, the following processing, when executed by said host processor
- receiving (24) from a co-processor (6) the location information;
- determining (22) an address for the data section in a table memory (8) based on the location information;
- receiving (28) from the co-processor the data section;
- writing (30) the data section at the determined address into the table memory; and
- writing (32) an entry of the metadata table, wherein said entry comprises the location information.

14. Receiver for data frames (Fi) received over a communication channel, wherein each data frame (Fi) comprises a data section (Si) for forming part of a data table and location information (Mi) associated with the data section and designating a location of said section within the data table, wherein the data table and a metadata table (MT) are built and stored as the data frames are received, to be made available to a host processor (2), **characterized in that** it comprises:
- means (4, 6) for buffering the data sections of the received frames and the associated location information;
- means (4) for determining an address for each data section in a table memory (8) based on the location information;
- means (4, 8) for writing each data section at the determined address into the table memory; and
- means (4, 8) for writing entries of a metadata table, wherein said entries comprise the location information of the received and memorized sections.

15. Receiver according to claim 14, further comprising a host processor (2) which comprises:
- said means (4, 8) for buffering the data sections of the received frames and the associated location information;
- means (4, 8) for reading the buffered location information and forward them to a host processor (2); and
- means (4, 8) for reading the buffered sections and forward them to the host processor,
and wherein the host processor comprises:
- means (2) for receiving from a co-processor (6) location information about the data sections;
- said means (2) for determining an address for each data section in the table memory (8) based on the location information;
- means for receiving from the co-processor the data sections;
- said means for writing each data section at the determined address into the table memory; and
- said means for writing entries of a metadata table, wherein said entries comprise the location information.

16. Receiver according to claim 14, further comprising a host processor (2) which comprises:
- said means (4, 6) for buffering the data sections of the received frames and the associated location information;
- said means (4) for determining an address for each data section in the table memory (8) based on the location information;
- said means (4, 8) for writing each data section at the determined address into the table memory; and
- said means (4, 8) for writing entries of a metadata table, wherein said entries comprise the location information of the received and memorized sections,
and wherein the host processor comprises:
- means (2, 8) for accessing the data table and the metadata table.
